# EUROPEAN PATENT APPLICATION

(11) **EP 1 758 281 A1**
(43) Date of publication of application: **28.02.2007**
(21) Application number: 05745930.7
(22) Date of filing: 25.05.2005
(51) Int. Cl.: H04B 17/00, H04B 1/04, H04B 7/26

(54) **TRANSMITTER LOAD IMPEDANCE FAULTY DETECTING SYSTEM**

(30) Priority: 25.05.2004 JP 2004154712
(71) Applicant: NEC CORPORATION, Minato-ku, Tokyo 108-8001 (JP)
(72) Inventor: YONEYAMA, Yuzo NEC Corporation, Minato-ku Tokyo 1088001 (JP)
(74) Representative: Vossius & Partner
(86) International application number: PCT/JP2005/010011
(87) International publication number: WO 2005/117309

(57) **Abstract**

The present invention provides a load impedance defect detection system for use in a CDMA base station transmitter including a base band signal generation unit (101) and a reflected signal monitor (106) for detecting a reflected signal. A CPICH power detector (111) detects a CPICH power from the reflected signal obtained from the reflected signal monitor. A return-loss determination unit (112) determines a return-loss based on a difference between a CPICH power value detected by the CPICH power detector and a CPICH transmission power set value (113) provided by the base band signal generation unit, and determines that there is a load impedance defect when the return-loss exceeds a predetermined threshold value.

## Description

### TECHNICAL FIELD

The present invention relates to a load impedance defect detection system for accurately detecting impedance defect of a load connected to a transmission output of a CDMA base station transmitter for use in mobile communication.

### BACKGROUND ART

It is a common practice in the field of mobile communication equipment that a transmitter is provided with a plurality of transmission antennas so that an appropriate one of the transmission antennas is selected to perform transmission. To put it simply, a reflected wave level from one of the transmission antennas that is selected by a switch is measured by a reflected wave measurement circuit. If the variation in the measured reflected wave level exceeds a predetermined value, the switch selects another transmission antenna to perform transmission. This type of technique is described in Tokuhyo (published Japanese translation of PCT patent publication) No. 2003-528533.

Aside from this, any impedance defect of a load of the transmitter, for example of a transmission antenna is detected, and if a defect is detected, a necessary measure is taken by generating an alarm or stopping the transmission, for example.

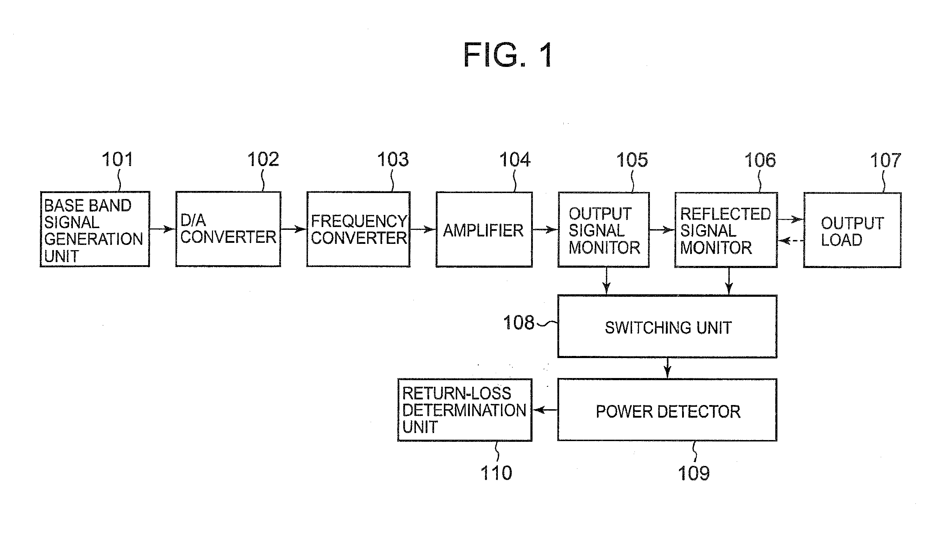

Referring to Fig. 1, the description will be made of an example of a conventional load impedance defect detection system. A base band signal generation unit 101 shown in Fig. 1 multiplexes a common channel such as a common pilot channel (hereafter to be abbreviated as CPICH) with an individual channel handling a user's data. The transmission power of the CPICH is always constant, whereas the transmission power of the individual channels is independently controlled by each user and hence varies in short periods of time. Additionally, no data is transmitted through an individual channel which has no user data, causing a burst transmission. Therefore, the transmission power may vary significantly in a short period time especially when the number of users is small.

An output from the base band signal generation unit 101 is converted into an analog signal by a D/A converter 102, and input into a frequency converter 103. The frequency converter 103 converts the input signal into a desired RF (Radio Frequency) signal and outputs the same to an amplifier 104. The amplifier 104 amplifies the input RF signal to a desired transmission power, and supplies the same to an output load 107 via an output signal monitor 105 and a reflected signal monitor 106.

A reflected signal is generated when there occurs mismatch between the impedance of the output load 107 and the output from the base station transmitter. The level of the reflected signal becomes higher as the degree of mismatch is increased. The reflected signal is output to a switching unit 108 by the reflected signal monitor 106. On the other hand, an output signal from the output signal monitor 105 is supplied to the switching unit 108. The switching unit 108 switches between the output signal from the output signal monitor 105 and the reflected signal from the reflected signal monitor 106 to alternately output them to a power detector 109.

In response to the output from the switching unit 108, the power detector 109 alternately detects the power of the output signal from the output signal monitor 105 and the power of the reflected signal from the reflected signal monitor 106, and outputs the detection result to a return-loss determination unit 110. The return-loss determination unit 110 determines return-loss based on the difference between the detected power values of the output signal and the reflected signal. The return-loss determination unit 110 determines that there is a load impedance defect when the return-loss exceeds a preset threshold value.

However, the load impedance defect detection system above has problems as described below.

A first problem relates to the fact that the output signal and the reflected signal are switched by the switching unit 108 so that the powers thereof are detected alternately by the power detector 109. When handling a signal having a transmission power which varies significantly in a short period of time, the power value of the output signal at the time when the power of the reflected signal is detected may be significantly different from an actually detected power value of the output signal. In this case, an erroneous result will be obtained if return-loss is determined based on the difference between the detected power value of the reflected signal and the detected power value of the output signal. This means that a load impedance defect cannot be detected correctly.

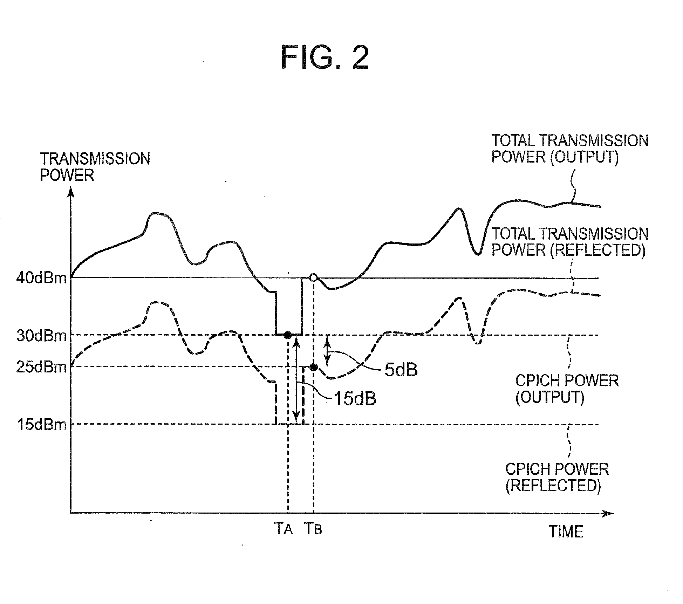

The problem described above will be described with reference to Fig. 2. In an example shown in Fig. 2, when a transmitted signal is detected at timing TA and reflected signal is detected at a timing TB, the transmitted signal is detected as 30 dBm and the reflected signal is detected 25 dBm. The return-loss determination unit 110 thus determines that the return-loss is 5 (=30-25) dB. This means that the detection result involves an error of 10 dB since the actual return-loss at the timing TA is 15 (=30-15) dB. In this case, it is determined that there is an impedance defect even though there is no abnormality if the threshold value is preset to 6 dB for example.

A second problem resides in the fact that, when the output load is an antenna, the power detector 109 cannot, when receiving an external wave having a high power, distinguish the external wave from reflected power even if the transmission power is constant. This will cause the return-loss determination unit 110 to erroneously determine that the reflected power is high and to fail to correctly detect a load impedance defect.

It is therefore an object of the present invention to make it possible to accurately detect an impedance defect of a load connected to a transmission output of a CDMA base station transmitter for use in mobile communication even in a condition where transmission power is varying or there exists a high-power external wave.

### DISCLOSURE OF THE INVENTION

The present invention provides a load impedance defect detection system for use in a CDMA base station transmitter including a base band signal generation unit and a reflected signal monitor for detecting a reflected signal. The load impedance defect detection system includes a power detector for detecting a power of a predetermined channel from a reflected signal obtained by the reflected signal monitor; and a return-loss determination unit for determining a return-loss based on a difference between the power value detected by the power detector and a power set value of the predetermined channel provided by the base band signal generation unit, and determining that there is a load impedance defect when the return-loss exceeds a predetermined threshold value.

In the load impedance defect detection system, the power detector is preferably a common pilot channel power detector which demodulates the power of a common pilot channel from the reflected signal obtained from the reflected signal monitor to detect the power value thereof. In this case, the return-loss determination unit determines the return-loss based on a difference between the detected power value and a common pilot channel transmission power set value provided by the base band signal generation unit.

In the load impedance defect detection system, the power detector may be a power detector which demodulates the power of a desired common channel or individual channel from the reflected signal obtained from the reflected signal monitor to detect the power value thereof. In this case, the return-loss determination unit obtains a power set value of the common channel or individual channel corresponding to a power detection timing of the power detector from the base band signal generation unit, and determines the return-loss based on a difference between the detected power value and the power set value obtained from the base band signal generation unit.

In the load impedance defect detection system, the base station transmitter includes a base band signal generation unit; a D/A converter for converting an output from the base band signal generation unit into an analog signal; a frequency converter for converting the signal from the D/A converter into a desired RF signal; and an amplifier for amplifying the RF signal to a desired transmission power, and then supplying the same to an output load via the reflected signal monitor.

In the load impedance defect detection system, there is no restriction on the timing for determining a return-loss, and the determination can be performed at any desired timing.

The present invention also provides a CDMA base station transmitter. The base station transmitter includes a base band signal generation unit; a reflected signal monitor for detecting a reflected signal; a D/A converter for converting an output from the base band signal generation unit into an analog signal; a frequency converter for converting a signal from the D/A converter into a desired RF signal; an amplifier for amplifying the RF signal to a desired transmission power and then supplying the same to an output load via the reflected signal monitor; a power detector for detecting a power of a predetermined channel based on a reflected signal obtained from the reflected signal monitor; and a return-loss determination unit for determining a return-loss based on a difference between a power value detected by the power detector and a power set value of the predetermined channel provided by the base band signal generation unit, and determining that there is a load impedance defect when the return-loss exceeds a predetermined threshold value.

In this base station transmitter as well, the power detector is preferably a common pilot channel power detector which demodulates the power of the common pilot channel from the reflected signal obtained from the reflected signal monitor to detect the power value thereof. In this case, the return-loss determination unit determines the return-loss based on a difference between the detected power value and a common pilot channel transmission power set value provided by the base band signal generation unit. Alternatively, the power detector may be a power detector which demodulates the power of a desired common channel or individual channel from the reflected signal obtained from the reflected signal monitor to detect the power value thereof. In this case, the return-loss determination unit obtains a power set value of the common channel or individual channel corresponding to a power detection timing of the power detector from the base band signal generation unit, and determines the return-loss based on a difference between the detected power value and the power set value obtained from the base band signal generation unit.

### BRIEF DESCRIPTION OF THE DRAWINGS

Fig. 1 is a block diagram illustrating configuration of a conventional load impedance defect detection system;
Fig. 2 is a characteristic diagram for explaining advantageous effects of a load impedance defect detection system of the present invention and problems of the conventional load impedance defect detection system;
Fig. 3 is a block diagram illustrating configuration of a preferred embodiment for implementing a load impedance defect detection system according to the present invention; and
Fig. 4 is a block diagram illustrating configuration of another embodiment for implementing the load impedance defect detection system according to the present invention.

### BEST MODE FOR CARRYING OUT THE INVENTION

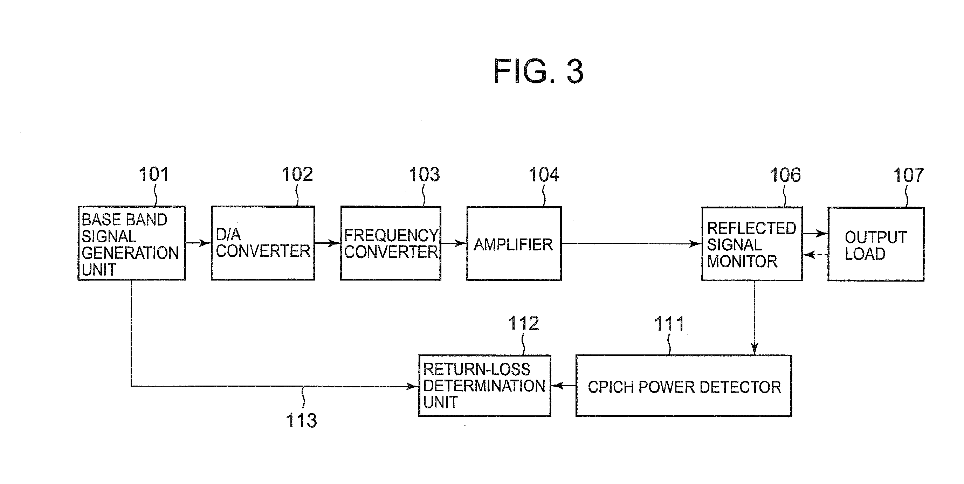

Fig. 3 is a block diagram illustrating a preferred embodiment for implementing the present invention. The present invention is particularly suitably applicable to a CDMA base station transmitter for use in mobile communication. In the configuration of this embodiment, the output signal monitor 105 shown in Fig. 1 is omitted, and a common pilot channel (hereafter abbreviated as CPICH) power detector 111 is provided in place of the power detector 109. A return-loss determination unit 112 compares a CPICH transmission power set value 113 provided by the base band signal generation unit 101 with a CPICH detected power value provided by the CPICH power detector 111 to determine return-loss based on a difference obtained by the comparison.

In the CDMA base station transmitter, the base band signal generation unit 101 multiplexes a common channel such as CPICH with an individual channel handling a user's data. The CPICH transmission power is always constant, whereas the transmission power of the individual channels varies in short periods of time since the power is controlled independently by each user. Further, no data is transmitted through the individual channel when there is no user data, which causes a burst transmission. Therefore, the total transmission power may vary significantly in a short period of time especially when the number of users is small.

An output from the base band signal generation unit 101 is converted into an analog signal by the D/A converter 102 and input into a frequency converter 103. The frequency converter 103 converts the input signal into a desired RF signal and outputs the same to an amplifier 104. The amplifier 104 amplifies the input RF signal to a desired transmission power, and supplies the amplified RF signal to an output load 107 via a reflected signal monitor 106.

A reflected signal is generated when there occurs mismatch between impedance of the output load 107 and an output from the base station transmitter. The level of the reflected signal becomes higher as the degree of mismatch is increased. The reflected signal is detected by the reflected signal monitor 106 and output to the CPICH power detector 111.

The CPICH power detector 111 demodulates the CPICH from the reflected signal obtained from the reflected signal monitor 106 to detect its power value. The return-loss determination unit 112 compares a CPICH transmission power set value 113 obtained from the base band signal generation unit 101 with the CPICH detected power value obtained from the CPICH power detector 111 to determine return-loss based on a difference obtained by the comparison. The return-loss determination unit 112 determines that there is a load impedance defect if the return-loss exceeds a predetermined threshold value. When the presence of load impedance defect is determined, a necessary measure is taken by generating an alarm or stopping the transmission, for example.

A description will be made of operation of the present embodiment with reference to Fig. 2 as well. As described before, Fig. 2 illustrates an example of time variation of output power of the base station transmitter. As seen from Fig. 2, the total transmission power always varies whereas the CPICH power is always fixed. A reflected signal, which is generated due to mismatch of the output load impedance, is a signal attenuated by a predetermined amount from the output power value either in the total transmission power or in the CPICH power. For example, when it is assumed that the CPICH power (output) is 30 dBm and the reflected power value caused by mismatch of the output load impedance is (the output power value minus 15 dB), the CPICH power value (reflected) in the reflected signal is 15 dBm.

Referring to Fig. 3, the CPICH power detector 111 demodulates the CPICH from the reflected signal obtained from the reflected signal monitor 106 to detect its power value. There generally occurs, in the output from the reflected signal monitor 106, a certain loss with respect to the reflected power from the output load. However, such loss can be neglected since it can be corrected easily.

In the example shown in Fig. 2, the CPICH power value (reflected) detected by the CPICH power detector 111 is 15 dBm, while the CPICH transmission power set value 113 provided by the base band signal generation unit 101 is 30 dBm. The return-loss determination unit 112 determines that the return-loss is 15 dB based on the difference between these two values. This determination result can be always obtained correctly without being affected by variation in the total transmission power. Thus, the return-loss determination unit 112 is enabled to determine that there is a load impedance defect when the return-loss exceeds the predetermined threshold value.

Further, according to this embodiment, the CPICH power (reflected) the transmission power of which is always constant is detected. This makes it possible to correctly determine return-loss and thus to detect a load impedance defect even in the condition where the transmission power is varying or there are high-power external waves.

Further, according to this embodiment, the CPICH power (reflected) in the reflected signal is used for determination of return-loss. This makes it possible to perform determination of return-loss at any desired timing without any restriction on detection timing. The control software is thus allowed to have a higher degree of freedom to perform interrupt processing for detecting the load impedance defect.

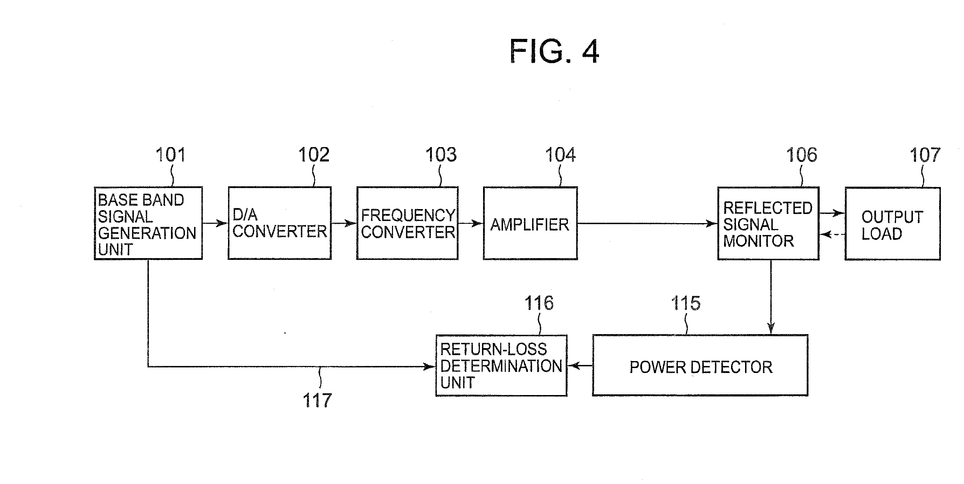

As shown in Fig. 4, a power detector 115 for detecting power of a desired common channel or individual channel may be used in place of the CPICH power detector 111 detecting power of the common pilot channel. A return-loss determination unit 116 used in this case obtains a power set value 117 of a common channel or individual channel corresponding to the power detection timing of the power detector 115 from the base band signal generation unit 101 to perform determination, whereby a similar effect to that of the embodiment above can be obtained.

The load impedance defect detection system according to the present invention provides advantageous effects as described below.

A first effect relates to the fact that the power of the reflected signal in a predetermined channel, for example a CPICH is measured and compared with a CPICH transmission power set value corresponding thereto to determine return-loss. This makes it possible to always determine return-loss correctly without being affected by variation in the total transmission power.

A second effect also relates to the fact that the power of the reflected signal in a predetermined channel, for example a CPICH is measured and compared with a CPICH transmission power set value corresponding thereto to determine return-loss. This makes it possible to always determine return-loss correctly and to prevent high-power external waves, which are undesirably received when an output load is an antenna, from being erroneously detected as reflected waves.

### INDUSTRIAL APPLICABILITY

The present invention is for example suitably applicable to a CDMA base station transmitter for use in mobile communication.

## Claims

1. A load impedance defect detection system for use in a CDMA base station transmitter including a base band signal generation unit and a reflected signal monitor for detecting a reflected signal, the system comprising:
a power detector for detecting a power of a predetermined channel from the reflected signal obtained by the reflected signal monitor; and
a return-loss determination unit for determining a return-loss based on a difference between the power value detected by the power detector and a power set value of the predetermined channel provided by the base band signal generation unit, and determining that there is a load impedance defect when the return-loss exceeds a predetermined threshold value.

2. The load impedance defect detection system according to Claim 1, wherein:
the power detector is a common pilot channel power detector which demodulates the power of a common pilot channel from the reflected signal obtained from the reflected signal monitor to detect the power value thereof; and
the return-loss determination unit determines the return-loss based on a difference between the detected power value and a common pilot channel transmission power set value provided by the base band signal generation unit.

3. The load impedance defect detection system according to Claim 1, wherein:
the power detector is a power detector which demodulates the power of a desired common channel or individual channel from the reflected signal obtained from the reflected signal monitor to detect the power value thereof; and
the return-loss determination unit obtains a power set value of the common channel or individual channel corresponding to a power detection timing of the power detector from the base band signal generation unit, and determines the return-loss based on a difference between the detected power value and the power set value obtained from the base band signal generation unit.

4. The load impedance defect detection system according to any one of Claims 1 to 3, wherein the base station transmitter comprises:
the base band signal generation unit;
a D/A converter for converting an output from the base band signal generation unit into an analog signal;
a frequency converter for converting a signal from the D/A converter into a desired RF signal; and
an amplifier for amplifying the RF signal to a desired transmission power, and then supplying the same to an output load via the reflected signal monitor.

5. The load impedance defect detection system according to any one of Claims 1 to 3, wherein the determination of the return-loss is performed at a desired timing.

6. The load impedance defect detection system according to any one of Claims 1 to 3, wherein the output load, the load impedance defect of which is determined, is an antenna.

7. A CDMA base station transmitter comprising:
a base band signal generation unit;
a reflected signal monitor for detecting a reflected signal;
a D/A converter for converting an output from the base band signal generation unit into an analog signal;
a frequency converter for converting a signal from the D/A converter into a desired RF signal;
an amplifier for amplifying the RF signal to a desired transmission power and then supplying the same to an output load via the reflected signal monitor;
a power detector for detecting a power of a predetermined channel based on a reflected signal obtained from the reflected signal monitor; and
a return-loss determination unit for determining a return-loss based on a difference between a power value detected by the power detector and a power set value of the predetermined channel provided by the base band signal generation unit, and determining that there is a load impedance defect when the return-loss exceeds a predetermined threshold value.

8. The CDMA base station transmitter according to Claim 7, wherein the power detector is a common pilot channel power detector which demodulates the power of the common pilot channel from the reflected signal obtained from the reflected signal monitor to detect the power value thereof; and
the return-loss determination unit determines the return-loss based on a difference between the detected power value and a common pilot channel transmission power set value provided by the base band signal generation unit.

9. The CDMA base station transmitter according to Claim 7, wherein the power detector is a power detector which demodulates the power of a desired common channel or individual channel from the reflected signal obtained from the reflected signal monitor to detect the power value thereof; and
the return-loss determination unit obtains a power set value of the common channel or individual channel corresponding to a power detection timing of the power detector from the base band signal generation unit, and determines the return-loss based on a difference between the detected power value and the power set value obtained from the base band signal generation unit.
